# EUROPEAN PATENT APPLICATION

(11) **EP 2 626 383 A1**
(43) Date of publication of application: **14.08.2013**
(21) Application number: 12154636.0
(22) Date of filing: 09.02.2012
(51) Int. Cl.: C08K 5/00, C08K 5/33, C09D 167/08, C08K 5/098, C08K 5/17

(54) **Accelerator for curing resins**

(71) Applicant: Akzo Nobel Chemicals International B.V., 3811 MH Amersfoort (NL)
(72) Inventor: Koers, Frederik Willem Karel, NL-7214 BZ EPSE (NL); Talma, Auke Gerardus, NL-7437 PM BATHMEN (NL)
(74) Representative: De Vries, Adriaan Jacobus

(57) **Abstract**

Accelerator formulation suitable for accelerating resin cure, comprising (i) an organic manganese compound, (ii) an oxime, (iii) a phosphate ester, and (iv) an amino alcohol.

## Description

The present invention relates to an accelerator formulation suitable for curing resins, in particular alkyd resins.

Oxidatively drying compositions such as paints, inks, varnishes and wood stains, are mostly based on resins containing unsaturations, dissolved in an organic medium or - in case of water borne paints - in an aqueous medium. A special class of resins containing unsaturations is alkyd resins. In alkyd resins, which are the most widely used air drying binders in paint formulations, the oxidatively drying unsaturations are generally based on unsaturated fatty acids or oils. The unsaturations are generally attached to a polymer backbone. Oxidatively drying or air-drying compositions to be employed in thin layers dry by evaporation of the solvent followed by autoxidation of the unsaturations and the subsequent crosslinking of the groups containing these unsaturations. It is well known that transition metals can accelerate the curing of these resins.

Other resins, such as unsaturated polyester (UP) resins, vinyl ester resins, and (meth)acrylate resins, are generally cured by redox systems comprising a peroxide and a soluble transition metal ion as accelerator. The accelerator serves to increase the activity of the oxidizing agent at lower temperatures and, consequently, to speed up the curing rate.

Many transition metal-based accelerators (also called siccatives or driers) are known. The most frequently used transition metal for this purpose is cobalt. However, legislation requires reduction of the amount of cobalt in view of its toxicity. Hence, there is an increasing demand for alternative, non-cobalt based accelerators.

Accelerators based on manganese have been reported. However, these accelerators are generally dark colored and/or require the use of expensive ligands. Dark coloring is disadvantageous for use in paints and other applications where color is an issue. The aim of the present invention is therefore to provide a manganese-based accelerator formulation which is colorless or only slightly colored and which does not require the use of expensive ligands.

It has now been found that a colorless Mn-based accelerator formulation with good curing properties can be obtained, provided that it comprises the following ingredients: (i) an organic manganese compound, (ii) an oxime, (iii) a phosphate ester, and (iv) an amino alcohol.

The accelerator formulation can be prepared by mixing at least the above ingredients to obtain a solution, which solution can then be used for curing resins by mixing the solution, optionally together with a peroxide, with said resin or a composition containing said resin (e.g. a coating composition). Such a solution is what we call an "accelerator solution". Evidently, the accelerator solution itself does not contain the resin to be cured.

Alternatively, the accelerator formulation is formed by adding its individual ingredients to a resin or resin-containing composition (e.g. a coating composition), thereby forming in the accelerator formulation in the presence of the resin to be cured.

The resulting resin- and accelerator-containing composition can be subsequently applied in the desired way and left to cure.

Suitable organic manganese compounds are manganese carboxylates and magnesium 1,3-diketones.

Examples of suitable carboxylates are lactate, 2-ethyl hexanoate, acetate, proprionate, butyrate, oxalate, laurate, oleate, linoleate, palmitate, stearate, octanoate, nonanoate, heptanoate, neodecanoate, or naphthenate.

A preferred manganese carboxylate is manganese acetate. 1,3-Diketones are compounds having the formula

X-C(=O)-C(R¹)(R²)-C(=O)-Y

wherein X and Y are selected from H, C₁₋₂₀ alkyl, C₆₋₂₀ aryl, alkylaryl, arylalkyl, part of a polymer chain, OR³, SR³, and NR³R⁴;
R¹, R², R³, and R⁴ each individually may represent hydrogen (H), or a C₁₋₂₀ alkyl, C₆₋₂₀ aryl, alkylaryl or arylalkyl group, that each optionally may contain one or more hetero-atoms (e.g. oxygen, phosphor, nitrogen or sulphur atoms) and/or substituents; a ring may be present between R¹ and R², R¹ and R³, and/or between R² and R⁴; R³ and/or R⁴ may be part of a polymer chain, may be attached to a polymer chain or may contain a polymerizable group.

Preferably, X and/or Y are/is C₁₋₂₀ alkyl and/or C₆₋₂₀ aryl. More preferably, X and/or Y are/is a methyl group. Most preferably, the 1,3-diketone is acetylaceton.

Any one of Mn(II), Mn(III), Mn(IV) and Mn(VII) compounds can be used.

The manganese compound is preferably present in an accelerator solution according to the present invention in an amount of 0.01-20 wt%, more preferably 0.1-10 wt%, and most preferably 0.5-5 wt%, calculated as metallic manganese and based on the total weight of the accelerator solution.

Suitable oximes for use in the accelerator formulation according to the present invention are oximes with the general structure

R¹R²C=N-OH,

wherein
R¹ is selected from hydrogen and linear, branched or cyclic C₁₋₆ alkyl, or aryl;
R² is selected from linear, branched or cyclic C₁₋₆ alkyl, and

-C(R³)-C(=)-(X)ₓ-(R⁴)_{y},

wherein R³ is selected from hydrogen and linear, branched or cyclic C₁₋₆ alkyl, which may optionally form a ring,
X is selected from N, O, S, and NH,
R⁴ is selected from linear, branched or cyclic C₁₋₆ alkyl, preferably methyl and ethyl,
x is either 0 or 1,
y is either 1 or 2.

A preferred oxime is 2-butanone oxime (R¹=ethyl; R²=methyl), also called methyl ethyl ketone oxime.

The oxime is preferably present in an accelerator solution according to the present invention in an amount of 10-90 wt%, more preferably 60-90 wt%, and most preferably 70-80 wt%.

Phosphate esters have the formula P(R)₃=O, wherein each R is independently selected from hydrogen, alkyl with 1 to 10 carbon atoms, and alkoxy groups with 1 to 10 carbon atoms. Preferably, at least two R-groups are selected from either alkyl groups of alkoxy groups. Specific examples of suitable phosphate esters are diethyl phosphate, dibutyl phosphate, tributyl phosphate, triethyl phosphate (TEP), dibutyl phosphite, and triethyl phosphate. Dibutyl phosphate is the most preferred phosphate ester.

The phosphate ester is preferably present in an accelerator solution according to the present invention in an amount of 1-80 wt%, more preferably 5-60 wt%, and most preferably 10-30 wt%.

Amino alcohols are organic compounds that contain both an amine and an alcohol functional group. Preferred amino alcohols include triethanol amine, dimethylamino ethanol, di-ethanolamine, di-ethanoltriamine, and (mono)ethanol amine. Di-ethanolamine is the most preferred amino alcohol.

The amino alcohol is preferably present in an accelerator solution according to the present invention in an amount of 1-50 wt%, more preferably 2-30 wt%, and most preferably 5-20 wt%.

In a preferred embodiment, the accelerator formulation also comprises a base. Amines are the preferred bases. Examples of suitable amines are tertiary amines such as triethyl amine, dimethylaniline, diethylaniline, or N,N-dimethyl-p-toludine (DMPT), polyamines such as 1,2-(dimethyl amine)ethane, secondary amines such as diethyl amine, ethoxylated amines such as Jeffamines, aromatic amines such a pyridine, bipyridine, and derivatives thereof such as nicotinamide, urea, quinuclidinol and derivatives thereof, DABCO, 2,2,6,6-tetramethyl-4-hydroxy-piperidine, 2,2,6,6-tetramethyl-4-piperidone, and 2,2,6,6-tetramethyl piperidine.

A preferred base is bipyridine.

If a base is present in an accelerator solution according to the present invention, its amount is preferably in the range 0.01-20 wt%, more preferably 0.1-10 wt%, all based on the total weight of the accelerator solution.

Examples of other compounds that may be present in the accelerator formulation are 1,3-diketones with the formula defined above, carboxylate salts, C₅₋₂₂ carboxylic acids, reducing agents, and non-discoloring complexing agents.Examples of 1,3-diketones are acetyl acetone, benzoyl acetone, and dibenzoyl methane, and acetoacetates such as diethyl acetoacetamide, dimethyl acetoacetamide, dipropylacetoacetamide, dibutylacetoacetamide, methyl acetoacetate, ethyl acetoacetate, propyl acetoacetate, and butylacetoacetate. Examples of suitable metal carboxylate salts are the 2-ethyl hexanoates, octanoates, nonanoates, heptanoates, neodecanoates, and naphthenates of ammonium, alkali metals, and alkaline earth metals. A preferred alkali metal is K. The salts may be added to an accelerator solution as such, or they may be formed *in situ.* For example, alkali metal 2-ethyl hexanoates can be prepared *in situ* in the accelerator solution, after addition of the alkali metal hydroxide and 2-ethyl hexanoic acid to the solution.

Examples of suitable C₅₋₂₂ carboxylic acids are stearic acid, palmitic acid, and other fatty acids.

Examples of reducing agents are ascorbic acid, sodium formaldehyde sulphoxylate (SFS), reducing sugars like glucose and fructose, oxalic acid, phosphines, phosphites, organic or inorganic nitrites, organic or inorganic sulphites, organic or inorganic sulphides, mercaptanes, and aldehydes, and mixtures thereof. Ascorbic acid, which term in this specification includes L-ascorbic acid and D-isoascorbic acid, is the preferred reducing agent.

Examples of non-discoloring complexing agents are 18-crown-6 and 15-crown-5.

An accelerator solution according to the present invention can be prepared by simply mixing the ingredients, optionally with intermediate heating and/or mixing steps.

Suitable resins to be cured using the accelerator formulation according to the invention include alkyd resins, unsaturated polyester (UP) resins, vinyl ester resins, (meth)acrylate resins, polyurethanes, and epoxy resins. The term "(meth)acrylate resin" refers to the combination of acrylate or methacrylate resin and ethylenically unsaturated monomeric compound.

Suitable UP resins to be cured by the process of the present invention are so-called ortho-resins, iso-resins, iso-npg resins, and dicyclopentadiene (DCPD) resins. Examples of such resins are maleic, fumaric, allylic, vinylic, and epoxy-type resins, bisphenol A resins, terephthalic resins, and hybrid resins.

Vinyl ester resins include acrylate resins, based on, e.g. methacrylate, diacrylate, dimethacrylate, and oligomers thereof.

Acrylate resins include acrylates, methacrylates, diacrylates and dimethacrylates, and oligomers thereof.

Preferred resins are alkyd resins. The term "alkyd resin" refers to polyester modified with fatty acids. Alkyd resins are generally prepared via the condensation polymerization of polyalcohols, polybasic acids, and fatty acids or triglyceryl oils. Preferably, an alkyd resin is the reaction product of (i) from 0 to about 30 mol% of a diol, (ii) from about 10 to about 40 mol% of a polyol, (iii) from about 20 to about 40 mol% of a polyacid, (iv) from 0 to about 10 mol% of a monofunctional acid, (v) from about 10 to about 50 mol% of a fatty acid, fatty ester or naturally occurring oil and, optionally, (vi) a catalyst, wherein the mole percents are based on the total moles of (i), (ii), (iii), (iv), (v) and (vi) if present. General types of alkyd resins are, for instance, alkyds, urethane alkyds, polyester amide alkyds and hybrid resins thereof, and any emulsions or dispersions thereof.

The term "alkyd resin" also includes modified alkyds, such as chain-stopped alkyds, styrenated alkyds (i.e. alkyds having a polystyrene backbone), acrylated alkyds (i.e. alkyds having a poly(meth)acrylate backbone), alkyds having other olefinic monomers for the polymeric backbone, silicone alkyds, uralkyds, epoxy ester alkyds, phenolic modified alkyds, rosin and rosin ester alkyds, etc.

More particularly, the accelerator formulation is suitable for hardening autoxidisable alkyd-based paints, inks, varnishes and wood stains.

As mentioned above, unsaturated polyester (UP) resins, vinyl ester resins, and (meth)acrylate resins, are generally cured by a peroxide. The accelerator serves the accelerate the cure by forming a redox system with the peroxide. Alkyd resins, however, are autoxidisable and a peroxide is not needed for them to cure. However, peroxides may be added to speed up the cure and to enable cure at lower temperatures.

Peroxides suitable for curing the resin include inorganic peroxides and organic peroxides, such as conventionally used ketone peroxides, peroxyesters, diaryl peroxides, dialkyl peroxides, and peroxydicarbonates, but also peroxycarbonates, peroxyketals, hydroperoxides, diacyl peroxides, and hydrogen peroxide. Preferred peroxides are organic hydroperoxides, ketone peroxides, peroxyesters, and peroxycarbonates. A particularly preferred peroxide is methyl ethyl ketone peroxide. The skilled person will understand that these peroxides can be combined with conventional additives, for instance fillers, pigments, and phlegmatisers. Examples of phlegmatizers are hydrophilic esters and hydrocarbon solvents. The amount of peroxide to be used for curing the resin is preferably at least 0.1 per hundred resin (phr), more preferably at least 0.5 phr, and most preferably at least 1 phr. The amount of peroxide is preferably not more than 8 phr, more preferably not more than 5 phr, most preferably not more than 2 phr.

### EXAMPLE

Two solutions (A and B) were prepared comprising the following ingredients: Solution A: 70.5 wt% 2-butanone oxime, 10 wt% di-ethanolamine, 15 wt%, dibutyl phosphate, and 4.5 wt% manganese(I) acetate tetrahydrate.

Solution B: 68 wt% 2-butanone oxime, 10 wt% di-ethanolamine, 15 wt%, dibutyl phosphate, 4.5 wt% manganese(I) acetate tetrahydrate, and 2.5 wt% bipyridine.

1 phr of these solutions were mixed with an 100 phr alkyd paint (siccative-free high gloss white Sikkens® Rubbol AZ; ex-AkzoNobel) and the resulting paint was applied on a glass strip with a film thickness of 90 μm. The drying time of the paint was measured according to ASTM D5895, using an Erichsen BK Drying recorder (Model 504).

According to this procedure, a needle slides over the painted glass strip in a period of 24 hours at a constant speed. The track produced by the needle of the painted trip varies with the drying stage of the paint. From this track, the time required for the paint to be hard dry can be determined.
Solution A resulted in a hard dry time of 15 hours and 0 minutes.
Solution B resulted in a hard dry time of 11 hours and 30 minutes.

The dried paint was white in both experiments.

For comparison, this experiment was repeated with a commercial cobalt dryer (Accelerator NL-53P ex-AkzoNobel), used in an amount of 0.1 phr, resulting in the same metal content as in the experiments above. This gave a hard dry time of 14 hours and 45 minutes.

The above experiments were repeated with the additional presence of 1 phr of different peroxides. The results are displayed in the Table below, which shows hat the drying time can be further reduced by the addition of a peroxide.

| | | | | | | | | | |
|---|---|---|---|---|---|---|---|---|---|
| Alkyd paint | 100 | 100 | 100 | 100 | 100 | 100 | 100 | 100 | 100 |
| Solution A | 1 | 1 | 1 | | | | | | |
| Solution B | | | | 1 | 1 | 1 | | | |
| NL-53P | | | | | | | 0.1 | 0.1 | 0.1 |
| Isopropyl hydroperoxide | 1 | | | 1 | | | 1 | | |
| Methyl isopropyl ketone peroxide | | 1 | | | 1 | | | 1 | |
| Cumyl hydroperoxide | | | 1 | | | 1 | | | 1 |
| **Hard dry time (hrs, min):** | **11,00** | **7,30** | **10,00** | **10,00** | **10,30** | **10,45** | **11,00** | **7,00** | **8,00** |

## Claims

1. Accelerator formulation suitable for accelerating resin cure, comprising (i) an organic manganese compound, (ii) an oxime, (iii) a phosphate ester, and (iv) an amino alcohol.

2. Accelerator formulation according to claim 1 wherein the manganese compound is a manganese carboxylate or a magnesium 1,3-diketone.

3. Accelerator formulation according to claim 2 wherein the manganese carboxylate compound is manganese acetate, manganese naphthenate, or manganese acetoacetonate.

4. Accelerator formulation according to any one of the preceding claims wherein the oxime is 2-butanone oxime.

5. Accelerator formulation according to any one of the preceding claims wherein the amino alcohol is di-ethanolamine.

6. Accelerator formulation according to any one of the preceding claims wherein the phosphate ester is dibutyl phosphate.

7. Accelerator formulation according to any one of the preceding claims, wherein the accelerator formulation is an accelerator solution.

8. Accelerator formulation according to claim 7 wherein the manganese compound is present in the solution in an amount of 0.5-2 wt%, calculated as metallic manganese and based on the total weight of the accelerator solution.

9. Accelerator formulation according to claim 7 or 8 wherein the oxime is present in the solution in an amount of 70-90 wt%, based on the total weight of the accelerator solution.

10. Accelerator formulation according to any one of claims 7-9 wherein the phosphate ester is present in the solution in an amount of 2-10 wt%, based on the total weight of the accelerator solution.

11. Accelerator formulation according to any one claims 7-10 wherein the amino alcohol is present in the solution in an amount of 5-20 wt%, based on the total weight of the accelerator solution.

12. Accelerator formulation according to any one of the preceding claims additionally comprising a base.

13. Accelerator formulation according to claim 12 wherein the base is bipyridine.

14. Coating composition comprising an alkyd resin and an accelerator formulation according to any one of the preceding claims.

15. Use of an accelerator formulation according to any one of claims 1-13 for curing a resin, optionally in the presence of a peroxide.
